(19) **Europäisches Patentamt European Patent Office Office européen des brevets**

(11) **EP 4 765 808 A1**

(12) **EUROPEAN PATENT APPLICATION**

(43) Date of publication:
**24.06.2026 Bulletin 2026/26**

(21) Application number: **24307153.7**

(22) Date of filing: **18.12.2024**

(51) International Patent Classification (IPC):
**H04N 19/124** $^{(2014.01)}$     **G06N 3/045** $^{(2023.01)}$
**G06N 3/0495** $^{(2023.01)}$     **G06N 3/084** $^{(2023.01)}$
**H04N 19/91** $^{(2014.01)}$

(52) Cooperative Patent Classification (CPC):
**H04N 19/124; G06N 3/045; G06N 3/0495; G06N 3/084; H04N 19/91**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
- **DAMODARAN, Bharath Bhushan 56000 VANNES (FR)**
- **SCHNITZLER, Francois 56890 SAINT AVE (FR)**
- **LE MEUR, Olivier 35160 TALENSAC (FR)**
- **LAMBERT, Anne 35250 SAINT-AUBIN-D'AUBIGNE (FR)**

(74) Representative: **Interdigital Immeuble ZEN 2 845 A, avenue des Champs Blancs 35510 Cesson-Sévigné (FR)**

(54) **QUANTIZATION AWARE TRAINING FOR DICTIONARY-DRIVEN IMPLICIT NEURAL REPRESENTATION FOR IMAGE AND VIDEO COMPRESSION**

(57) In various implementations, methods and devices are disclosed that involves quantization aware training for dictionary-driven INR (Implicit Neural Representation). For instance, one or more quantization parameters for an INR network corresponding to an image region are obtained, wherein the INR network is reconstructed at both encoding and decoding by combining tail layers to head layers, the tail layers being defined by the one or more inverse quantized network parameters and the head layers being a weighted combination of one or more INR basis functions by the one or more inverse quantized coefficients, respectively. Then, the image region is reconstructed based on the reconstructed INR network. The one or more quantization parameters for the INR network, the one or more quantized coefficients of the head layers and the one or more quantized network parameters of the tail layers are encoded into or decoded from the bitstream.

input bitstream, basis functions

| Decode parameters of a quantization-aware based INR responsive to basis functions | 610 |
| De-quantize parameters | 620 |
| Reconstruct the INR network | 630 |
| Perform inference using coordinates | 640 |

**FIG. 6**

EP 4 765 808 A1

**Description**

**BACKGROUND**

The present application is related to a method and an apparatus for neural compression. Neural compression or learning-based compression is the application of neural networks and other machine learning methods to data compression. Those techniques are currently being investigated by MPEG, and there is a new ad-hoc group which focuses on the Implicit Neural Representation-based compression (INR-based) within Working Group 4. Typically, INR-based compression techniques have a far lower computational complexity than end-to-end neural compression approaches.

**BRIEF SUMMARY**

In various implementations, methods and devices are disclosed that involves quantization aware training for dictionary-driven Implicit Neural Representation.

Briefly stated, in one embodiment, a method of video encoding or decoding is disclosed that comprises obtaining one or more quantization parameters for an INR network corresponding to a region of an image or 3D scene, wherein the INR network comprises head layers and tails layers, the head layers being a weighted combination of one or more INR basis functions; obtaining one or more inverse quantized coefficients corresponding to one or more INR basis functions of the head layers of the INR network; obtaining one or more inverse quantized network parameters corresponding to the tail layers of the INR network; reconstructing the INR network by combining tail layers of the INR network to head layers of the INR network, wherein tail layers are defined by the one or more inverse quantized network parameters and wherein head layers are a weighted combination of the one or more INR basis functions by the one or more inverse quantized coefficients, respectively; and reconstructing the region based on the reconstructed INR network wherein the one or more quantization parameters for the INR network, the one or more quantized coefficients of the head layers and the one or more quantized network parameters of the tail layers are encoded into or decoded from the bitstream.

One or more embodiments also provide an apparatus for encoding or decoding video comprising one or more processors and at least one memory coupled to said one or more processors, wherein said one or more processors are configured to perform the encoding or decoding method according to any of the embodiments described herein.

One or more embodiments also provide a computer program comprising instructions which when executed by one or more processors cause the one or more processors to perform the encoding or decoding method according to any of the embodiments described herein. One or more of the present embodiments also provide a computer readable storage medium having stored thereon instructions for encoding or decoding a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 illustrates a block diagram of a system within which aspects of the present embodiments may be implemented;
FIG. 2 illustrates a simple neural network used for Implicit Neural Representation (INR);
FIG. 3 illustrates a typical process to encode a signal using INR;
FIG. 4 illustrates a process for quantization aware training while encoding a signal using dictionary-based INR according to an embodiment;
FIG. 5 illustrates a process to encode a signal using quantization-aware dictionary-based INR according to an embodiment; and
FIG. 6 illustrates a process to decode a signal using quantization-aware dictionary-based INR according to an embodiment.

**DETAILED DESCRIPTION**

In describing the various embodiments of the present disclosure, certain terminology is used herein for convenience only and should not be considered as limiting such embodiments. In the drawings, the same reference numerals are employed for designating the same elements throughout the several figures and the present description.

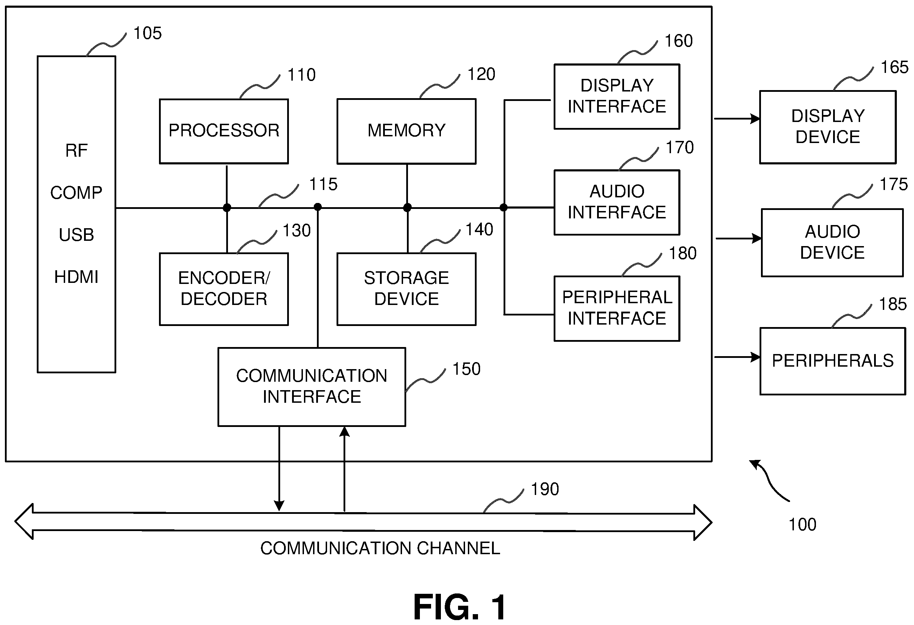

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

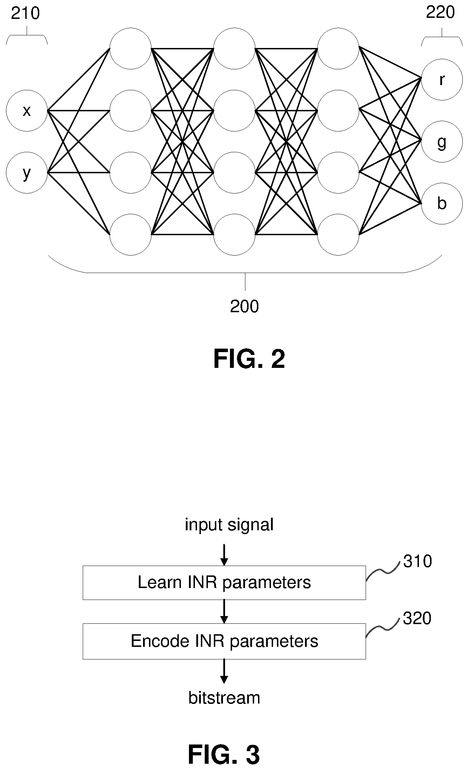

FIG. 2 illustrates a simple neural network used for implicit neural representation (INR). Such a neural network used for INR can be referred to as an INR network. For clarity, we use for illustration a 2D signal such as an image, but INR can be used for signals of any dimension. INR parameterizes a signal as a function 200, which takes coordinates 210 as input and outputs approximated values 220 of a signal at these coordinates. INR has recently been applied to images, 2D videos or 3D objects among other applications. In the image case, the inputs 210 can be pixel coordinates $(x, y)$ and the INR may output 220 the color values $(r, g, b)$ or $(y, u, v)$ of the input pixels. In the video case, the input can include the frame index $t$ in addition to pixel coordinates.

The input coordinates may be modified by a transformation before being used as input for the neural network. This transformation can be a Fourier mapping, coordinate transformation, normalization etc. In this document, we will illustrate our methods using the Fourier mapping, where an input point with $(x, y)$ pixel coordinates is mapped into a higher dimensional feature space before being passed through the network:

$$\gamma(\mathrm{v}) = [cos(2\pi \mathrm{B} \mathrm{v}), sin(2\pi \mathrm{B} \mathrm{v})]^T \qquad (1)$$

where B is a random Gaussian matrix, whose each entry is drawn independently from a normal distribution $N(0, \sigma^2)$.

The INR can be used to reconstruct a signal by computing the signal values for every necessary coordinate input. It can be used to upsample a signal by generating output for input coordinates corresponding to the upsampled pixels, for example the mean of the coordinates between two consecutive pixels for upsampling by a factor of 2.

An INR network 200 is typically a neural network composed of multiple neural layers, such as fully connected layers. In FIG. 2, the network has four neural layers. Intermediate outputs are represented by circles. Each neural layer can be described as a function that first multiplies the input by a tensor, adds a vector called the bias and then applies a nonlinear function on the resulting values. In this document, we may also refer to "neural layer" simply as "layer." The shape (and other characteristics) of the tensor and the type of non-linear functions are called the architecture of the network. We will denote the values of the tensor and the bias by the term "weights". The weights and, if applicable, the parameters of the non-linear functions, are called the parameters $\theta$ of the network. The architecture and the parameters define a "model". We will use $f_\theta$ to denote an INR function parameterized by $\theta$.

FIG. 3 illustrates a typical process to encode a signal using INR. This is done by optimizing 310 the parameters $\theta$ (or a subset of them) of the INR network to reconstruct the signal and optionally encoding 320 parameters to create the output bitstream. For an image $I$ of size $(M \times N)$, the parameters $\theta$ or (the chosen subset) can for example be optimized by minimizing the following loss function:

$$Loss = D(I, f_\theta) + \lambda\, R(\theta) \qquad (2)$$

$$D_{MSE} = \frac{1}{MN}\Sigma_{x,y}(I(x, y) - f_\theta(x, y))^2 \qquad (3)$$

where D is a distortion which quantifies the difference between the image predicted (reconstructed) by $f_\theta$ and the original image $I$, $R$ is the bitrate of the encoded parameters and $\lambda$ a trade-off parameter between D and $R$, $D$ could be any differentiable distortion measure, such as mean squared error as shown in Eq. (3), and M and N are the width and height of an image, respectively. Other metrics such as LPIPS (Learned Perceptual Image Patch Similarity) can also be used in this case. The optimization of the parameters $\theta$ is typically performed by a machine learning approach such as a batch/-stochastic gradient descent method.

To decompress the signal, $f_\theta$ is evaluated at all relevant coordinates. These coordinates can be selected at decoding. A typical choice would be all pixel coordinates for an image or video. As an example, for a 256x256 pixel image, these coordinates could be all pairs $(x, y)$ for all $x \in \{0,1, ...,255\}$ and $y \in \{0,1, ...,255\}$. Other choices are possible, for example to upsample, downsample or extend the original image.

Using one INR network globally for the whole signal makes learning difficult, as all parameters contribute to all values and lead to a large network as it must encode all details of the signal.

In a commonly owned EP Application No. 23306188.6 ("Approximating Implicit Neural Representation through Learnt Dictionary Atoms", hereinafter '188), we have described how a signal, or a part of a signal can be better encoded by approximating some parameters of the INR network using a dictionary approximation. By doing so, the INR network can be encoded by the weights of the non-approximated parts and some additional information that describes the approximated parts. In the following of the present disclosure, we will take as an example an INR divided into head $h$ and tail $t$ layers, as $f_\theta = t_{\theta_t} \cdot h_{\theta_h}$, and approximate $\theta_h$. This is an example of a decomposition into a composited representation, and other types of decompositions could be used without any loss of generality. For the approximation, we proposed to learn a dictionary $D = [d_1, d_2, ... d_K]$ with K INR atoms so that each head layer is approximated (represented) using a sparse linear combination of the atoms of the dictionary. That is,

$$\hat{\theta}_h = D\gamma \approx \theta_h \qquad (4)$$

The sparse coefficients $\gamma$ are for example approximated by optimizing the following loss function,

$$\arg\min_{\gamma} \|\theta_h - D\gamma\| + \alpha \|\gamma\|_1 \qquad (5)$$

where $\theta_h$ is the weights of the head layers, $D$ is the learnt dictionary, and $\gamma$ is the sparse coefficients to be optimized. To enforce the sparsity in the coefficient vector, the L1 norm is used and $\alpha$ is the trade-off between the two terms in the equation.

In another commonly owned EP Application No. 23306514.3. "Dictionary-Driven implicit neural representation for image and video compression", hereinafter '514, we have described how a signal or a part of a signal can be encoded by approximating some layers of the INR network using a dictionary approximation with sparsity constraints. Similarly to '188, this also allows encoding the INR network by the weights of the non-approximated parts and some additional information that describes the approximated parts. As previously, an INR can be divided into head $h$ and tail $t$ layers, as $f_\theta = t_{\theta_t} \cdot h_{\theta_h}$, and approximate $h_{\theta_h}$. This is an example of a decomposition into a composited representation, and other types of decompositions could be used without any loss of generality. For the approximation, we proposed to learn a dictionary $D = [f_{d_1}, f_{d_2}, ... f_{dk}]$ with k INR functions so that each head layer is approximated (represented) using a sparse linear combination of the atoms of the dictionary. That is,

$$\widehat{h_{\theta_h}} = \sum_{j=1}^{j=k} \gamma_j f_{d_j} \approx h_{\theta_h} \qquad (6)$$

Such an approximation can for example be achieved by the man skilled in the art by the optimization of the following cost:

$$arg\min_{\gamma} \sum_{x \in B} \left| I(x) - t_{\theta_t} \circ \sum_{i=1}^{i=k} \gamma_i f_{d_i}(x) \right|^2 + \beta |\gamma|_1 \qquad (7)$$

where B is the spatial support of the INR approximation (all image, bloc, superpixel, etc). This optimization problem may also be modified to optimize the dictionary $D$ and/or the weights $\theta_t$. It may also include additional losses, such as a $l_1$ or $l_2$ losses on some or all the optimized parameters.

Further in the commonly owned EP Application No. 24306067.0 "Video Specific Dictionary Learning for implicit neural compression", hereinafter '067, we have described how a signal or a part of a signal can be encoded by using a learnt video or signal specific dictionary. Besides, as described in the EP Application No. 24306763.4 "Dictionary Learning for implicit neural compression", hereinafter '763, related to signal specific dictionary for dictionary-based INR, we propose allowing the decoder to re-compute a dictionary on a segment of the signal using the same procedure as the encoder, leading to a smaller bitstream as the dictionary is not transmitted.

However, in all these solutions, after the completion of the above optimization (training) procedure, the encoding the parameters of the non-approximated parts and approximated parts comprises quantization and entropic coding such as described in MPEG-NNC, thus during the decoding the quantization error will be present and impactful in the decoding INR networks. The quantization error may decrease the quality of the reconstructed signal.

In one or more embodiments, we propose a quantization aware training dictionary-based representation for encoding the parameters of the non-approximated parts and approximated parts of the INR networks that reduces the impact of the quantization error and allows for better reconstruction of the signal. Advantageously, the INR network is aware of the quantization error, and during training, the INR network will learn to mitigate impact of the quantization. In different variants of the one or more embodiments, we describe quantization aware training applied to any of the variants for dictionary driven INR described above.

According to a first embodiment, it is proposed a quantization aware training approach to quantize the approximated parts of the signal (mixture coefficients) and non-approximated parts (network parameters) of the signal for the dictionary-based INR encoding.

According to a second embodiment, it is proposed a method for encoding into the bitstream a quantization aware dictionary-based INR.

According to a third embodiment, it is proposed a method for decoding from the bitstream a quantization aware dictionary-based INR.

Let us recall the dictionary-based INR method, where it contains head $h$ and tail $t$ layers, as $f_\theta = t_{\theta_t}\, h_{\theta_h}$, and the learnt dictionary $D = [f_{d_1}, f_{d_2}, ... f_{d_k}]$ with k INR functions. Now the head layer is approximated (represented) using a sparse linear combination of the atoms of the dictionary. That is,

$$\widehat{h_{\theta_h}} = \sum_{j=1}^{j=k} \gamma_j f_{d_j} \approx h_{\theta_h} \qquad (8)$$

Such an approximation can for example be achieved by the man skilled in the art by optimizing the following cost:

$$arg\min_{\gamma,\theta_t} \sum_{x \in B} \left| I(x) - t_{\theta_t} \circ \sum_{i=1}^{i=k} \gamma_i f_{d_i}(x) \right|^2 + \beta |\gamma|_1 \quad (9a)$$

Where, $I(x)$ is the signal values at $x$, $t_{\theta_t}$ is the tail network with the parameters $\theta_t$, $\gamma$ is the mixture coefficients of the dictionary atoms, $|\gamma|_1$ is the sparsity constraints to enforce that $\gamma$ contains only few non-zero values, and $\beta$ is the trade-off hyperparameter, the higher the value very few non-zero values in $\gamma$.

**Feature(s) associated with quantization aware training and dictionary-based INR method are provided herein.**

According to a first embodiment, it is proposed a quantization aware training approach to quantize the approximated parts of the signal (mixture coefficients) and non-approximated parts (network parameters) of the signal for the dictionary-based INR encoding. The parameters encoded in the bitstream for the dictionary-based INR method are $\theta_t, \gamma$, thus we propose to use the quantization aware training (QAT) while optimizing the equation (1).

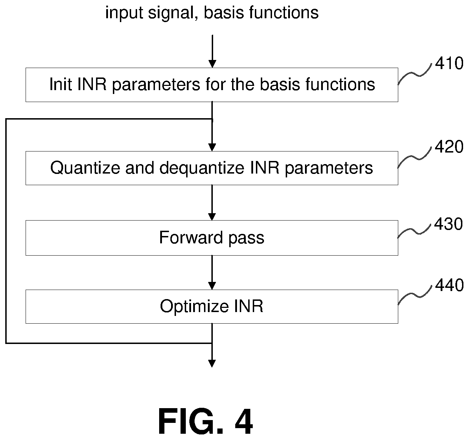

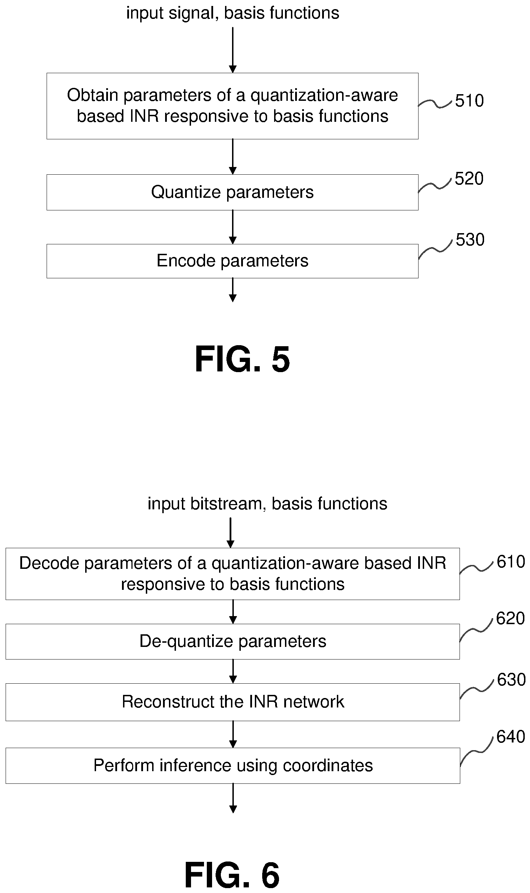

FIG. 4 illustrates a process for quantization aware training while encoding a signal using dictionary-based INR according to an embodiment. The method of FIG. 4 may be implemented in the step 510 of FIG. 5. According to a preliminary step 410, a first pass allows initializing parameters $\gamma$, $\theta_t$, encoded in the bitstream for any variant of the dictionary-based INR methods. Then, in a second step 420, INR parameters $\gamma, \theta_t$ are quantized and inverse quantized. For instance, in 420, the mixture coefficients $\gamma$ are quantized with a fixed quantization step size s as follows:

$$\hat{\gamma} = Q(\gamma, s) = round(\gamma.s) \qquad (10)$$

Where $round()$ is the operator which convert the floating point to the nearest integer, and $Q()$ is the quantization function. According to a variant, the step size s is a power of 2. Then, the inverse quantization or dequantization of the mixture coefficients $\gamma$ is performed as follows:

$$\tilde{\gamma} = Q^{-1}(\hat{\gamma}, s) = \frac{\hat{\gamma}}{s} \qquad (11)$$

Besides, in 420, the tail network parameters $\theta_t$ are quantized as:

$$\widehat{\theta_t} = Q(\theta_t, s) = round(\theta_t.s) \qquad (12)$$

and followed by a dequantization performed as:

$$\widetilde{\theta_t} = Q^{-1}(\widehat{\theta_t}, s) = \frac{\widehat{\theta_t}}{s} \qquad (13)$$

According to different variants, in the tail network parameters, the bias and weights might be quantized differently with different step sizes, or the bias might not be quantized.

In a third step 430, the forward pass of the dictionary-based INR is performed based on the dequantized $\tilde{\gamma}$ and $\tilde{\theta}_t$.

In a fourth step 440, in order to optimize the equation (9b) after quantization and dequantization, gradient calculations are performed using the straight through estimation (STE) as the rounding operation is non-differentiable. Advantageously, STE considers the rounding operation during the backward pass as the identity function, that means during the forward pass the dictionary-based INR's prediction is based on the dequantized parameters, and the gradient calculation during the backward pass is based on the unquantized parameters.

$$arg\min_{\gamma,\theta_t} \sum_{x\in B}\left|I(x) - t_{Q^{-1}(Q(\theta_t))} \circ \sum_{i=1}^{i=k} Q^{-1}(Q(\gamma_i))f_{d_i}(x)\right|^2 + \beta|Q^{-1}(Q(\gamma))|_1 \qquad (9b)$$

Finally, the dictionary-based INR is trained by repeating the steps 420 to 440, until the convergence. By doing so, the resulting dictionary-based INR is aware of the quantization during the forward pass and learns to reduce the impact of the quantization error in the backward pass, thus the reconstruction of the signal will be closer to the reconstruction of an unquantized dictionary-based INR, thus quality of reconstruction is improved.

Once the training or optimization is completed, the quantized mixture coefficients $\tilde{\gamma}$, quantization step size $s$, and quantized tail network parameters $\hat{\theta}_t$ are encoded in the bitstream. Encoding may involve use of the entropy coders, such as MPEG-NNC. The quantization step size s may be encoded using 32 bits.

In a variant, the quantization step size s may be different for the mixture coefficients and for tail network parameters. In this case let $s_\gamma$, $s_t$ be the respective quantization step sizes. In this case, we need to signal both the step sizes to the decoding side. In the tail network parameters, the quantization step size may be different for the weight and bias, this needs to be signaled in the bitstream similarly.

In yet another variant, the quantization step size $s$, $s_\gamma$, $s_t$ may also be learnt by the optimization process or by the greedy optimization procedure, that is searching for the best step size.

In another variant, the mixture coefficients $\gamma$, and the tail parameters $\theta_t$ may be normalized before applying the quantization. In this case the hyper-parameters related to the normalization need to be signaled in the bitstream in-order to apply inverse normalization after dequantization. For example, the parameters may be normalized by the mean of the parameters.

In another variant, the mixture coefficients $\gamma$, and the tail parameters $\theta_t$ may be optimized with the entropy constraints as:

$$arg\min_{\gamma,\theta_t} \sum_{x\in B}\left|I(x) - t_{\theta_t} \circ \sum_{i=1}^{i=k} \gamma_i f_{d_i}(x)\right|^2 + \beta|\gamma|_1 - \log_2 p(\widehat{\theta_t}) - \log_2 p(\hat{\gamma})$$

$$(14)$$

Where $p()$ be a fixed probability distribution such as Laplacian distribution, Gaussian distribution, etc, or $p()$ could be parameterized by the neural network. In this case, if the fixed probability distribution is used, then the parameters of the distribution need to be signaled to the decoder with fixed bits. If the $p()$ is parameterized by the neural network, then the neural network parameters need to be signed to decoder.

For dictionary-based INR method where the learnt dictionary is available at the encoding and decoding side, and dictionary is learnt on the large collection of the head parameters such as in '188, the quantization aware training on the general dictionary learning may be skipped.

**Feature(s) associated with Signal-Specific Dictionary based INR with Quantization aware training are provided herein.**

In the case of the signal-specific dictionary-based INR, the dictionary is learnt on the few parts of the signal and the dictionary-based INR is used to encode the parts used in the learning the signal-specific dictionary and the parts that are not used in the learning the signal-specific dictionary. For example, the signal-specific dictionary could be learnt on the first frame, and this could be used to approximate the first frame and remaining frames of the signal as described in patent application '067.

Since we need to transmit the signal specific dictionary to the decoder side for each specific part of the signal, according to a variant, the quantization aware training approach may be applied to learn the signal specific dictionary. That is, by applying the quantization and dequantization mentioned in the previous section, and optimization through the straight through estimation (STE). The quantization may involve searching for an optimal best step size, normalization of the dictionary atoms etc. with:

$$\arg\min_{\gamma} \|\theta_h - Q^{-1}(Q(D))\gamma\| + \alpha \|\gamma\|_1 \qquad (15)$$

as the quantized dictionary atoms $D$ are encoded in the bitstream. Besides, the method of FIG. 4 may be applied to encode the signal using the quantized signal specific dictionary. By using the quantization aware training approach to learn the signal specific dictionary, the effect of the quantization error coming from the dictionary as well as the propagation of error are reduced.

**Feature(s) associated with non-transmitted Signal-Specific Dictionary-based INR with Quantization aware training are provided herein.**

In the non-transmitted signal-specific dictionary learning as disclosed in the patent application '763, the signal specific dictionary is learnt at encoder and decoder side. So, the dictionary is not transmitted but learnt again in the decoder side by using the similar information that was used in the encoding side. In this variant, the quantization aware training may be used in several ways to learn an improved dictionary. According to this variant, the information needed to learn the signal-specific dictionary is the INR head parameters ($\theta_h$) of the few parts of the signal and these parameters are quantized and send to the decoder side. Accordingly, a variant of the present principles, the quantization aware training is applied on the INR head parameters ($\theta_h$) and tail parameters ($\theta_t$) during the encoding of the few parts of the signal. Using this resulting INR head parameters $\widetilde{\theta_h}$, the signal-specific dictionary is learnt in the encoding step. The quantized $\widetilde{\theta_h}$ INR head parameters and $\hat{\theta}_t$ INR tail parameters are encoded in the bitstream, and in the decoding side after applying the inverse quantization, the signal-specific dictionary is learnt in the decoding side using the dequantized head parameters $\widetilde{\theta_h}$.

Since the dictionary is learnt on both encoding side and decoding side with INR head parameters $\widetilde{\theta_h}$ for which the effect of quantization error is considered, this variant would lead in a better quality of the reconstructed signal.

For the other parts of the signal, encoding is performed similar to the section related to quantization aware training and dictionary-based INR.

**Feature(s) associated with encoding in a bitstream a quantization aware dictionary-based INR are provided herein.**

According to a second embodiment, it is proposed a method for encoding into the bitstream a quantization aware dictionary-based INR. FIG. 5 illustrates a process to encode a signal using quantization-aware dictionary-based INR according to an embodiment. In a first step 510, parameters of a quantization-aware based INR responsive to basis functions are obtained. The encoding method of FIG. 5 may implement any variant of the quantization aware training disclosed with the embodiment of FIG. 4. In a variant, a dictionary-based INR network may comprise head layers h and tails layers t, the head layers being a weighted combination of k INR basis functions composing the dictionary $D = [f_{d_1}, f_{d_2}, \dots f_{d_k}]$.

For instance, step 510 may comprise obtaining one or more inverse quantized coefficients corresponding to one or more INR basis functions of the head layers of the INR network and obtaining one or more inverse quantized network parameters corresponding to tail layers of the INR network. By inverse quantized parameters, the skilled in the art will understand the quantized then inverse quantized parameters (i.e. mixture coefficients $\tilde{\gamma}$ and tail network parameters $\tilde{\theta}_t$) of equations (11) and (13) for instance. According to a variant where a normalization is applied on the mixture coefficients $\tilde{\gamma}$ and tail network parameters $\theta_t$, then hyper-parameters of the normalization method may be encoded in the bitstream with fixed bits (e.g. 32 bits). The normalization method could be different for mixture coefficients and tail network parameters, if this the case, then the normalization method need to be signaled in the bitstream, and also could be represented in different fixed bits.

Thus, step 510 may further comprise obtaining one or more quantization parameter s for an INR network corresponding to a region of the image. In a variant, a same quantization parameter s is shared for mixture coefficients $\tilde{\gamma}$ and tail network parameters $\tilde{\theta}_t$. In another variant, a first quantization parameter $s_\gamma$ is defined for mixture coefficients corresponding to one or more INR basis functions of the head layers of the INR network and a second quantization parameter $s_t$ is defined for the network parameters corresponding to tail layers of the INR network. Note that further quantization parameters may be defined for other variants of the first embodiment such as for the parameters of the dictionary when transmitted, the INR parameters of the part of the signal used to derive implicit specific dictionary.

Then, step 510 may comprise reconstructing the quantization-aware INR network by combining tail layers of the INR network to head layers of the INR network. The tail layers are obtained from the one or more inverse quantized network parameters and the head layers are obtained from a weighted combination of the one or more INR basis functions by the one or more inverse quantized coefficients, respectively. The region is then reconstructed based on the INR network. As disclosed with the quantization aware training of the previous sections, the one or more inverse quantized coefficients, the one or more inverse quantized network parameters may be obtained by an optimization process using inverse quantized version of such parameters. For instance, a plurality of reconstructed versions of the image based on a plurality of respective one or more quantization parameters, the one or more inverse quantized coefficients, the one or more inverse quantized network parameters are obtained. A plurality of respective differences is computed between the image $I(x)$ and a reconstructed version $\hat{I}$; and the one or more inverse quantized coefficients (i.e. mixture coefficients $\tilde{\gamma}$), the one or more inverse quantized network parameters (i.e. tail network parameters $\tilde{\theta}_t$) are selected based on the plurality of respective differences. In a variant, the one or more quantization parameters may further be part of the optimization. In a variant, the optimization may be iterative.

In a step 520, the one or more coefficients of the head layers and the one or more network parameters of the tail layers are quantized to be encoded in the bitstream in a step 530.

According to a variant, in the step 530, the one or more quantization parameters for the INR network may be encoded. For instance, the quantization step parameter s is encoded in the bitstream with fixed bits representation. If different quantization step size is used for mixture coefficients and tail network parameters, then the respective quantization step $s_\gamma$, $s_t$ are encoded in the bitstream, and they could be represented with different bit resolutions.

In the step 530, the quantized mixture coefficients $\hat{\gamma}$ are encoded in the bitstream. This may involve use of entropy coders.

In the step 530, the quantized tail network parameters $\hat{\theta}_t$ are encoded in the bitstream. This may involve use of entropy coders.

According to yet another variant of 530, if the explicit probability distributions are used to encode the $\hat{\gamma}$, $\hat{\theta}_t$ in the bitstream, then the probability models' parameters need to be encoded in the fixed bits. The mixture coefficients and tail network parameters can be encoded using two different probability distributions, then that information should be signaled in the bitstream. If the probability distribution or entropy model are parameterized by the neural network, then the weights of the neural network should be signaled in the bitstream, and they could be encoded using MPEG-NNC or any entropic coders.

**Feature(s) associated with encoding in a bitstream a quantization aware signal-specific dictionary-based INR are provided herein.**

FIG. 5 may also illustrate a process to encode a signal using quantization-aware dictionary-based INR wherein the dictionary is signal-specific according to a variant embodiment. Since the signal specific dictionary is transmitted to the decoder side for each signal, the quantization aware training approach may be applied to learn the signal specific dictionary as exposed above. Different variants may involve the following features.

The basis functions of the signal-specific dictionary are quantized as $\hat{D} = \left[ \widehat{f_{d_1}}, \widehat{f_{d_2}}, \dots, \widehat{f_{d_k}} \right]$ and encoded in the bitstream. This may involve entropy coders. If the normalization is applied on the dictionary basis, then hyper-parameters of the normalization method is encoded in the bitstream with fixed bits (e.g. 32 bits).

If the normalization is applied on the mixture coefficients $\gamma$ and tail network parameters $\theta_t$ then hyper-parameters of the normalization method is encoded in the bitstream with fixed bits (e.g. 32 bits). The normalization method could be different for mixture coefficients and tail network parameters, if this the case, then need to be signaled in the bitstream, and also could be represented in different fixed bits.

The quantization step parameter s may be encoded in the bitstream with fixed bits representation. If different quantization step size is used for mixture coefficients and tail network parameters, then $s_\gamma$, $s_t$ may be encoded in the bitstream, and they could be represented with different bit resolutions.

The quantized mixture coefficients $\hat{\gamma}$ are encoded in the bitstream. This may involve use of entropy coders.

The quantized tail network parameters $\hat{\theta}_t$ are encoded in the bitstream. This may involve use of entropy coders.

If the explicit probability distributions are used to encode the $D, \hat{\gamma}, \hat{\theta}_t$ in the bitstream, then the probability models' parameters need to be encoded in the fixed bits. The mixture coefficients and tail network parameters can be encoded using two different probability distributions, then that information should be signaled in the bitstream. If the probability distribution or entropy model are parameterized by the neural network, then the weights of the neural network should be signaled in the bitstream, and they could be encoded using MPEG-NNC or any entropic coders.

**Feature(s) associated with encoding in a bitstream a quantization aware implicit signal-specific dictionary-based INR are provided herein.**

FIG. 5 may also illustrate a process to encode a signal using quantization-aware dictionary-based INR wherein the dictionary is signal-specific and learnt at both encoder and decoder side according to this variant embodiment.

According to this variant, the information needed to learn the signal-specific dictionary is the INR head parameters ($\theta_h$) of the few parts of the signal and these parameters are quantized and send to the decoder side. Accordingly, this variant embodiment may involve the feature of quantizing and inverse quantizing network parameters corresponding to head layers $\theta_h$ of the INR network for a part of the bitstream notwithstanding quantizing and inverse quantizing network parameters corresponding to tail layers $\theta_t$ of the INR network for that part of the bitstream.

Then, if the normalization is applied on the head network parameters $\theta_h$, then hyper-parameters of the normalization method is encoded in the bitstream with fixed bits (e.g. 32 bits). The normalization method may be different for different layers of the head network, and if it is the case, it should be signaled in the bitstream.

If the normalization is applied on the tail network parameters $\theta_t$, then hyper-parameters of the normalization method may be encoded in the bitstream with fixed bits (e.g. 32 bits). The normalization method could be different for different layers of the tail network, and if it is the case, it should be signaled in the bitstream.

The quantization step size s may be encoded in the bitstream with fixed bits representation. The quantization step size could be different for head and tail network parameters, and if it is the case, it should be signaled in the bitstream.

The quantized head parameters $\widehat{\theta_h}$ of the few parts of the video signal are encoded in the bitstream. This may involve use of entropy coders.

The quantized tail network parameters $\hat{\theta}_t$ of the few parts of the video signal are encoded in the bitstream. This may involve use of entropy coders.

If the explicit probability distributions are used to encode the $\widehat{\theta_h}$, $\hat{\theta}_t$ in the bitstream, then the probability models' parameters may be encoded in the fixed bits. The mixture coefficients and tail network parameters can be encoded using two different probability distributions, then that information should be signaled in the bitstream. If the probability distribution or entropy model are parameterized by the neural network, then the weights of the neural network should be signaled in the bitstream, and they could be encoded using MPEG-NNC or any entropic coders.

For the other parts of the signal, the encoding procedure in the bitstream is similar to the encoding in a bitstream of a quantization aware dictionary-based INR.

**Feature(s) associated with decoding from a bitstream a quantization aware dictionary-based INR are provided herein.**

According to a third embodiment, it is proposed a method for decoding from the bitstream a quantization aware dictionary-based INR. FIG. 6 illustrates a process to decode a signal using quantization-aware dictionary-based INR according to an embodiment. In a first step 610, parameters of a quantization-aware dictionary-based INR responsive to basis functions are obtained. The decoding method of FIG. 6 may implement any variant of the quantization aware dictionary-based INR disclosed with the embodiment of FIG. 4. In a variant, a dictionary-based INR network may comprise head layers h and tails layers t, the head layers being a weighted combination of k INR basis functions composing the dictionary D = [$f_{d_1}$, $f_{d_2}$, ... $f_{d_k}$].

The step 610 may further comprise obtaining, for instance by decoding, one or more quantization parameters for the INR (Implicit Neural Representation) network corresponding to a region of the image or 3D scene. For instance, according to different variants, one or more quantization step sizes s, $s_\gamma$, $s_t$ are decoded from the bitstream.

In yet another variant of step 610, the normalization parameters may also be decoded from the bitstream, if normalization is used.

Besides, the step 610 may further comprise decoding, from the bitstream, information related to the entropic decoding for both mixture coefficients and tail network parameters. Then, the quantized mixture coefficients $\hat{\gamma}$ are entropic decoded from the bitstream and the quantized tail network parameters $\hat{\theta}_t$ are entropic decoded from the bitstream.

In a step 620, quantized mixture coefficients $\hat{\gamma}$ and the quantized tail network parameters $\hat{\theta}_t$ are inverse quantized to provide one or more inverse quantized coefficients $\tilde{\gamma}$ corresponding to one or more INR basis functions of the head layers of the INR network and one or more inverse quantized network parameters $\tilde{\theta}_t$ corresponding to the tail layers of the INR network.

In the variant where normalization is used, inverse normalization is applied on the dequantized values $\tilde{\gamma}$ and $\tilde{\theta}_t$.

Then in step 630, the INR network is reconstructed by combining tail layers of the INR network to head layers of the INR network, wherein tail layers are derived from the one or more inverse quantized network parameters $\tilde{\theta}_t$ and wherein head layers are obtained from a weighted combination of the one or more INR basis functions by the one or more inverse quantized coefficients $\tilde{\gamma}$, respectively.

Then, in a step 640, inference is performed with the reconstructed INR network using pixel coordinates to reconstruct the image region.

Note that the decoding method of FIG. 6 may also apply for decoding from a bitstream a quantization aware signal-specific dictionary-based INR. The quantized signal-specific dictionary basis functions $\hat{D}$ are entropic decoded from the bitstream, and the inverse quantization is applied to obtain the signal-specific INR dictionary basis functions $\tilde{D}$. In the variant where normalization is used, inverse normalization is applied on the dequantized values $\tilde{D}$.

**Feature(s) associated with decoding from a bitstream a quantization aware implicit signal-specific**

**dictionary-based INR are provided herein.**

According to a variant of third embodiment, it is proposed a method for decoding from the bitstream a quantization aware dictionary-based INR based on implicit signal-specific dictionary. Accordingly, the decoding method of FIG. 6 may be applied to decode head and tail network for few parts of the video signal used to learn the dictionary. Accordingly, when used, the normalization parameters of the head network parameters may be decoded from the bitstream. The normalization parameters of the tail network parameters are decoded from the bitstream, if it is used.

Then, the quantization step sizes may be decoded from the bitstream. The information related to the entropic decoding may also be decoded from the bitstream for both head and tail network parameters.

The quantized head network parameters $\widehat{\theta_h}$ are entropic decoded from the bitstream. The quantized tail network parameters $\hat{\theta}_t$ are entropic decoded from the bitstream. Dequantization is applied on the $\widehat{\theta_h}$ and $\hat{\theta}_t$. Inverse normalization is applied on the dequantized $\widehat{\theta_h}$ and $\hat{\theta}_t$.

The information related to the dictionary learning are decoded from the bitstream and the dictionary is learnt at the decoder side.

For the other parts of the signal, the decoding procedure in the bitstream is similar to decoding from a bitstream a quantization aware dictionary-based INR of FIG. 6.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

**1.** A method of decoding video data representative of an image or a 3D scene, comprising:

obtaining one or more quantization parameters for an INR (Implicit Neural Representation) network corresponding to a region of the image or 3D scene, wherein the INR network comprises head layers and tails layers, the head layers being a weighted combination of one or more INR basis functions;
obtaining one or more inverse quantized coefficients corresponding to one or more INR basis functions of the head layers of the INR network;
obtaining one or more inverse quantized network parameters corresponding to the tail layers of the INR network;
reconstructing the INR network by combining tail layers of the INR network to head layers of the INR network, wherein tail layers are defined by the one or more inverse quantized network parameters and wherein head layers are a weighted combination of the one or more INR basis functions by the one or more inverse quantized coefficients, respectively; and
reconstructing the region based on the reconstructed INR network.

**2.** A method of encoding video data representative of an image or a 3D scene, comprising:

obtaining one or more quantization parameters for an INR (Implicit Neural Representation) network corresponding to a region of the image or 3D scene, wherein the INR network comprises head layers and tails layers, the head layers being a weighted combination of one or more INR basis functions;
obtaining one or more inverse quantized coefficients corresponding to one or more INR basis functions of the head layers of the INR network;
obtaining one or more inverse quantized network parameters corresponding to tail layers of the INR network;
reconstructing the INR network by combining tail layers of the INR network to head layers of the INR network, wherein tail layers are defined by the one or more inverse quantized network parameters and wherein head layers are obtained from a weighted combination of the one or more INR basis functions by the one or more inverse quantized coefficients, respectively;
reconstructing the region based on the reconstructed INR network; and
encoding the one or more quantization parameters for the INR network, the one or more quantized coefficients of the head layers and the one or more quantized network parameters of the tail layers.

**3.** The method of claim 2, wherein obtaining at least one of the one or more quantization parameters, the one or more inverse quantized coefficients, the one or more inverse quantized network parameters comprises:

obtaining a plurality of reconstructed versions of the image or 3D scene based on a plurality of respective one or more quantization parameters, the one or more inverse quantized coefficients, the one or more inverse quantized network parameters;
forming a plurality of respective differences between the image or 3D scene and the plurality of reconstructed versions; and
selecting at least one of the one or more quantization parameters, the one or more inverse quantized coefficients, the one or more inverse quantized network parameters based on the plurality of respective differences between the image or 3D scene and the plurality of reconstructed versions.

**4.** The method of any one of claims 1-3, wherein the one or more quantization parameters for INR network comprises a first quantization parameter for one or more coefficients corresponding to one or more INR basis functions of the head layers of the INR network and a second quantization parameter for the one or more network parameters corresponding to tail layers of the INR network.

**5.** The method of any one of claims 1-4, wherein the one or more quantization parameters for INR network are a power to 2.

**6.** The method of any one of claims 2-5, further comprising at least one of:

normalizing one or more coefficients corresponding to one or more INR basis functions of the head layers of the INR network before quantization and inverse quantization; or
normalizing one or more network parameters corresponding to the tail layers of the INR network before quantization and inverse quantization.

**7.** The method of any one of claims 1-5, wherein the one or more INR basis functions are commonly shared by one or more regions of the image or 3D scene, or the one or more INR basis functions for the region are different than another one or more INR basis functions for an another region, or the one or more INR basis functions for the region are implicitly learnt at the encoding or decoding.

**8.** The method of any one of claims 1 and 4-7, wherein obtaining one or more inverse quantized coefficients corresponding to one or more INR basis functions of the head layers of the INR network comprises:

> decoding from a bitstream a quantized value of the one or more coefficients corresponding to one or more INR basis functions of the head layers of the INR network; and
> inverse quantizing the decoded quantized value of the one or more coefficients.

**9.** The method of any one of claims 1 and 4-8, wherein obtaining one or more inverse quantized network parameters corresponding to the tail layers of the INR network comprises:

> decoding from a bitstream a quantized value of the network parameters corresponding to the tail layers of the INR network; and
> inverse quantizing the decoded quantized value of the one or more network parameters.

**10.** An apparatus for decoding video data representative of an image or a 3D scene, comprising at least one memory or one or more processors, wherein the one or more processors are configured to:

> obtain one or more quantization parameters for an INR (Implicit Neural Representation) network corresponding to a region of the image or 3D scene, wherein the INR network comprises head layers and tails layers, the head layers being a weighted combination of one or more INR basis functions;
> obtain one or more inverse quantized coefficients corresponding to one or more INR basis functions of the head layers of the INR network;
> obtain one or more inverse quantized network parameters corresponding to the tail layers of the INR network;
> reconstruct the INR network by combining tail layers of the INR network to head layers of the INR network, wherein tail layers are defined by the one or more inverse quantized network parameters and wherein head layers are a weighted combination of the one or more INR basis functions by the one or more inverse quantized coefficients, respectively; and
> reconstruct the region based on the reconstructed INR network.

**11.** An apparatus for encoding video data representative of an image or a 3D scene, comprising at least one memory and one or more processors, wherein the one or more processors are configured to:

> obtain one or more quantization parameters for an INR (Implicit Neural Representation) network corresponding toa region of the image or 3D scene, wherein the INR network comprises head layers and tails layers, the head layers being a weighted combination of one or more INR basis functions;
> obtain one or more inverse quantized coefficients corresponding to one or more INR basis functions of the head layers of the INR network;
> obtain one or more inverse quantized network parameters corresponding to tail layers of the INR network;
> reconstruct the INR network by combining tail layers of the INR network to head layers of the INR network, wherein tail layers are defined by the one or more inverse quantized network parameters and wherein head layers are obtained from a weighted combination of the one or more INR basis functions by the one or more inverse quantized coefficients, respectively;
> reconstruct the region based on the reconstructed INR network; and
> encode the one or more quantization parameters for the INR network, the one or more quantized coefficients of the head layers and the one or more quantized network parameters of the tail layers.

**12.** The apparatus of claim 11, wherein the one or more processors are configured to obtain at least one of the one or more quantization parameters, the one or more inverse quantized coefficients, the one or more inverse quantized network parameters by performing:

> obtaining a plurality of reconstructed versions of the image or 3D scene based on a plurality of respective one or more quantization parameters, the one or more inverse quantized coefficients, the one or more inverse quantized network parameters;

forming a plurality of respective differences between the image or 3D scene and the plurality of reconstructed versions; and

selecting at least one of the one or more quantization parameters, the one or more inverse quantized coefficients, the one or more inverse quantized network parameters based on the plurality of respective differences between the image or 3D scene and the plurality of reconstructed versions.

**14.** The apparatus of any one of claims 10-13, wherein the one or more quantization parameters for INR network comprises a first quantization parameter for one or more coefficients corresponding to one or more INR basis functions of the head layers of the INR network and a second quantization parameter for the one or more network parameters corresponding to tail layers of the INR network.

**15.** A signal comprising video data representative of an image or a 3D scene, formed by performing the method of any one of claims 2-9.

**FIG. 1**

210

220

x

y

r

g

b

200

**FIG. 2**

input signal

| Learn INR parameters | 310 |

| Encode INR parameters | 320 |

bitstream

**FIG. 3**

input signal, basis functions

Init INR parameters for the basis functions — 410

Quantize and dequantize INR parameters — 420

Forward pass — 430

Optimize INR — 440

# FIG. 4

input signal, basis functions

Obtain parameters of a quantization-aware based INR responsive to basis functions — 510

Quantize parameters — 520

Encode parameters — 530

# FIG. 5

input bitstream, basis functions

Decode parameters of a quantization-aware based INR responsive to basis functions — 610

De-quantize parameters — 620

Reconstruct the INR network — 630

Perform inference using coordinates — 640

# FIG. 6

Europäisches
Patentamt

European
Patent Office

Office européen
des brevets

# EUROPEAN SEARCH REPORT

**Application Number**

EP 24 30 7153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2024/078892 A1 (INTERDIGITAL CE PATENT HOLDINGS SAS [FR]) 18 April 2024 (2024-04-18) * page 4, line 10 - line 23 * * page 7, line 1 - line 24 * * page 8, line 23 - line 33 * ----- | 1-12,14, 15 | INV. H04N19/124 G06N3/045 G06N3/0495 G06N3/084 H04N19/91 |
| Y | WO 2024/074373 A1 (INTERDIGITAL CE PATENT HOLDINGS SAS [FR]) 11 April 2024 (2024-04-11) * page 11, line 14 - line 17 * * page 12, line 3 - line 7 * * page 14, line 11 - page 16, line 33 * ----- | 1-12,14, 15 | |

**TECHNICAL FIELDS SEARCHED (IPC)**

H04N
G06N

The present search report has been drawn up for all claims

| Place of search | Date of completion of the search | Examiner |
|---|---|---|
| Munich | 9 May 2025 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 765 808 A1**

## ANNEX TO THE EUROPEAN SEARCH REPORT
## ON EUROPEAN PATENT APPLICATION NO.

EP 24 30 7153

09-05-2025

| Patent document cited in search report | Publication date | Patent family member(s) | Publication date |
|---|---|---|---|
| WO 2024078892 A1 | 18-04-2024 | NONE | |
| WO 2024074373 A1 | 11-04-2024 | NONE | |

EPO FORM P0459

**EP 4 765 808 A1**

REFERENCES CITED IN THE DESCRIPTION

**Patent documents cited in the description**

- EP 23306188
- EP 23306514
- EP 24306067
- EP 24306763